(19) Europäisches Patentamt
European Patent Office
Office européen des brevets

(11) Publication number : 0 520 752 A1

(12) **EUROPEAN PATENT APPLICATION**

(21) Application number : 92305774.9

(22) Date of filing : 24.06.92

(51) Int. Cl.$^5$ : C08K 13/02, C08L 23/08, H01B 1/24, // (C08K13/02, 3:02, 5:54)

(30) Priority : 24.06.91 GB 9113584

(43) Date of publication of application : 30.12.92 Bulletin 92/53

(84) Designated Contracting States : AT BE CH DE DK ES FR GB GR IT LI NL PT SE

(71) Applicant : BP Chemicals Limited
Belgrave House 76 Buckingham Palace Road
London, SW1W 0SU (GB)

(72) Inventor : Reid, William Bain
BP Chemicals Limited, Bo'ness Road
Grangemouth, Stirlingshire (GB)

(74) Representative : Preece, Michael (GB) et al
BP International Limited Patents and Agreements Division Sunbury Research Centre Chertsey Road
GB-Sunbury-on-Thames, Middlesex TW16 7LN (GB)

(54) **Stabilised polymer composition and use.**

(57) A polymer composition suitable for use as a semi-conducting layer comprising a polar ethylenic polymer, a particulate conductor and at least one hydrolyzable silane is described. Preferred hydrolyzable silanes are of the formula

$$[R^1_aR^2_{3-a}Si]_b\ R^{11}$$

where $R^1$ is a hydrolyzable group,
$R^2$ is an alkyl, cycloalkyl, aryl, or aralkyl
a is an integer from 1 to 3
b is an integer from 1 to 4
and $R^{11}$ is an organic group of valency b.

The polymer composition preferably comprises a phenolic or amine antioxidant.

An insulated electric cable comprising a semi-conducting of a polymer composition as described is also disclosed.

The preferred method of preparing the polymer composition comprises melt mixing the polymer, the conductor and the silane.

EP 0 520 752 A1

This invention relates to stabilised polymer compositions and their use, in particular ethylenic copolymeric compositions and their use in electrical cables.

Medium and high voltage electrical cables comprise a metallic conductor surrounded by an insulating layer of plastics material, and usually one or more conductive layers of plastics material (hereafter called "semi-conductive material" or "semi-conductive layers"). Degradation of olefin polymers during processing or use because of oxygen may normally be reduced by incorporation in the polymer of primary antioxidants such as phenols, and optionally secondary antioxidants such as phosphites, but such incorporation is usually incompletely effective in the case of polymers for electrical cable use because of the effect of electrical fields on the polymers and contaminants therein.

Addition of at least one hydrolyzable silane to the semi-conductive layer can greatly reduce the rate of degradation of the semi-conductive layer.

The present invention provides a polymer composition comprising a polar ethylenic polymer, a particulate conductor and at least one hydrolyzable silane, said composition being preferably obtainable by blending said polymer conductor and silane. The invention also provides a method of producing said composition which comprises blending said polymer conductor and said silane especially melt blending them. There is also provided a semi conducting layer for a cable comprising such a polymer composition.

The invention also provides a method of making an insulated cable which comprises applying to an electrically conducting core at least one layer of a polymer composition of the invention and at least one polymeric insulating layer. There is also provided an insulated electrical cable having an electrically conducting core, at least one semi conducting layer of the invention and at least one polymer insulating layer, preferably with the concentration of silane in the semi conducting layer being substantially uniform across the layer, and/or the concentration of said silane in the semi conducting layer being greater than the concentration of silane (if any) in the insulating layer.

The polar ethylenic polymer is a copolymer of ethylene and a polar ethylenically unsaturated monomer, which is preferably an ester or carboxylic acid or nitrile. Examples of such monomers are ones from ethylenic unsaturated acids eg of 3-6 carbons such as acrylic or methacrylic acids or alkyl esters and nitriles thereof. Such alkyl esters are preferably lower alkyl esters with eg 1-8 carbons especially 1-6 carbons, such as methyl, ethyl, n- and iso propyl, n, sec or iso-butyl, amyl, n-hexyl and n-octyl acrylates and methacrylates; methyl, ethyl and butyl acrylates and methacrylates are preferred. Other examples of such monomers are acrylonitrile and methacrylonitrile. Other kinds of monomers are ones at least notionally derived from ethylenically unsaturated alcohols eg of 2-5 carbon atoms such as "vinyl alcohol", allyl alcohol and methallyl alcohol such as esters thereof with carboxylic acids eg of 1-6 carbon atoms such as acetic and propionic acids; examples of such monomers are vinyl acetate and vinyl propionate. A mixture of monomers may be used in the copolymer. If desired the polar ethylenic polymer can be a chlorinated derivative of the above polar polymer or a graft copolymer obtained by grafting vinyl chloride or an aromatic vinyl monomer eg styrene or alpha methyl styrene onto the ethylenic polymer backbone.

The weight proportion of polar monomer to the total of polar monomer and ethylene in the polar polymer may be 1-80%, eg 5-25% or 20-50% or 60-80%.

The conductor is usually a particulate solid, such as an inorganic one but is preferably electrically conducting carbon black, soot or graphite. Such carbon blacks may contain ionic impurities and usually have surface hydroxyl groups eg in carboxylic acid groups. The carbon blacks usually have pH values of 2-11.5 eg 2-5.5 or 7-11.5 and are of surface area (measured by BET) of 5-500 eg 10-100 or 50-250 $m^2/g$. Channel black, acetylene black and furnace black, including lamp black may be used. The amount of the conductor is usually 5-75% preferably 25-70% and especially 25-50% or 40-60% by weight of the total weight of polymer composition.

The silanes can remove water from the polymer composition and may act as water tree inhibitors and/or as complexants or deactivators for complexing metals, in particular non transition metals of 2 or 3 valency such as Mg and Al and transition metals eg of 2-6 valency such as those Groups 4A-8 and 1B of the Periodic Table especially those of the 3d series ie Ti, V, Cr, Mn, Fe, Co, Ni and Cu. The silane may act to complex these metals which may behave as prodegradants of the ethylenic polymer. The silane may be a chelator which can be bi or tri dentate and form 4-6 membered rings with the metal and may form complexes which may have 1-3 moles silane per g atom of metal. However, the silane may simply interact with the prodegradant metals reducing their effect. The silane may be a solid but is preferably a liquid at 150°C, especially a liquid at 25°C. It is generally stable at the processing temperature of the compositions eg 150°C, but is preferably substantially non volatile at that temperature.

The hydrolyzable silane can contain at least one, preferably at least 2 silicon atoms per molecule and at least one eg 1-3 and preferably 3 groups per silicon atom hydrolyzable therefrom; it also contains 1-3 preferably 1-2 and especially 1 organic group bound via carbon to each silicon atom. The silane may be of formula I $[R^1_aR^2_{3-a}Si]_bR^{11}$, wherein $R^1$, $R^2$, and a are as defined below b is an integer of at least 1 and $R^{11}$ represents

$R^2$ (when b is 1) or $R^3Y$ (when b is 1) or $R^{10}$ wherein $R^2$, $R^3$, Y and $R^{10}$ are as defined below. Details of possible hydrolyzable groups are given for $R^1$ Among suitable organic groups bound to the silicon especially in monosilanes, are alkyl, cycloalkyl, aryl or aralkyl groups, with further details being given for $R^2$ below, but especially alkyl of 6-20 carbons, such as n-octyl, n-dodecyl, tetradecyl hexadecyl, stearyl and octadecyl, or alkenyl eg of 2-10 carbon atoms such as vinyl, allyl isopropenyl, butenyl, or cycloalkenyl eg of 5-7 carbons such as cyclohexenyl, or halo alkyl or haloaryl, eg of 1-10 or 6-13 carbons respectively such as 3-chloro or 3-bromopropyl, chloromethyl and 2-chloroethyl and chloromethylphenyl. Examples of such silanes are n hexyl, n-octyl, lauryl, cetyl and stearyl trimethoxy and triethoxysilanes.

Preferred silanes are those with at least one polar atom or group in an organic group bonded via carbon to the silicon atom as well as optionally containing an inert group, as in $R^2$ below. In this case the formula of the monosilane can be represented as II below.

$$R^1{}_aR^2{}_{3-a}Si\ R^3\text{-}Y \qquad II$$

Wherein $R^1$ represents a group such that Si-$R^1$ is hydrolyzable with water, $R^2$ represents an alkyl, cycloalkyl, aryl or aralkyl group, $R^3$ represents a divalent organic group and Y represents a polar group, which is usually a Lewis basic group, and especially contains at least one 0, S, N and/or P atom. Examples of oxygen containing groups for Y are alcohol ether and ester eg OH, $OR^{12}$, $00CR^{13}$, wherein $R^{12}$ is as defined for $R^2$, and $R^{13}$ is as defined for $R^2$ or alkenyl or cycloalkenyl, details of suitable alkenyl or cycloalkenyl groups being given in the previous paragraph; examples of suitable groups -$R^3$-Y are 3-hydroxypropyl and its acetate, acrylate and (meth) acrylate esters with the silane being eg the corresponding trimethoxy or triethoxy silanes. Y may also contain an epoxy group, as in a glycidyloxy group, or $R^3Y$ can represent an epoxy hydrocarbyl group such as 2(3,4-epoxy cyclohexyl) ethyl or 1,2 epoxy ethyl.

Examples of sulphur containing groups for Y are thiol, thioether thio ester or thio cyanate eg SH, $SR^{12}$, $SOCR^{13}$, SCN where $R^{12}$ and $R^{13}$ are as defined above; examples of suitable silanes are 3-mercaptopropyl- and 3 thiocyanato propyl-trimethoxy and triethoxy silanes. Examples of suitable nitrogen containing groups for Y are isocyanate, cyanide, amine, amide, ureide or polyorganic, polyamine eg NCO, CN, $NH_2$, $NHR^{12}$, $NR^{12}R^{14}$, $NHOCR^{13}$, $NHCONH_2$, $NHCONHR^{12}$, NH $CONR^{12}R^{14}$, $NHR^{15}NH_2$, $NHR^{15}NHR^{16}$, $NHR^{15}NR^{12}R^{16}$ wherein $R^{12}$ and $R^{13}$ are as defined above, $R^{14}$ is as defined for $R^2$, $R^{15}$ is as defined for $R^3$, $R^{16}$ is as defined for $R^2$, including substituted aralkyl with 1-3 hydrocarbyl substituents each of 1-6 carbons in the aromatic eg benzene ring, such as p vinyl benzyl. Preferably $R^{12}$, $R^{14}$ and $R^{16}$ are methyl, ethyl or phenyl, $R^{13}$ is methyl, ethyl, vinyl, propen-2-yl, phenyl and $R^{15}$ is alkylene of 1-4 carbons especially 1,2-ethylene or 1,3-propylene. Y can also be a nitrogen containing heterocycle eg a 5 or 6 numbered ring with 1-3 nitrogen atoms, such as imidazole (bonded to $R^3$ via C or N) or pyridine bonded to $R^3$ via C. 3-Amino propyl and 3-(2-aminoethyl) amino propyl and their N substituted derivatives are preferred for Y, as in the corresponding trimethoxy and triethoxy silanes.

Examples of suitable P containing groups for Y are phosphine and alkoxy phosphonyl groups eg $PR^{12}R^{14}$ and $PO(OR^{12})(OR^{14})$, where $R^{12}$ and $R^{14}$ are as described above, for example - diphenyl phosphinyl ($Ph_2P$) and diethoxy phosphonyl $(EtO)_2OP$-.

The preferred hydrolyzable silanes, are silanes with at least 2 Si atoms per molecule, each attached to at least one hydrolyzable group and bonded together via an organic bridging group, which has at least one carbon atom backbone, and may contain at least 2 carbon atoms in the backbone optionally interrupted with at least one N, S or O atom. Silanes liquid at 25°C are preferred. The silane is especially of formula III

$$[R^1{}_aR^2{}_{3-a}Si]_bR^{10}$$

wherein $R^{10}$ is an organic group of formula -$R^3$- or $[-R^3]_bX$,

where X is a bridging group preferably one terminating in atoms of at least one element of Group BV or VIB of the Periodic table especially ONS and/or P such as an O, $S_n$, N $R^4SiR^5{}_{3-c}R^6{}_c$, $PR^4SiR^5{}_{3-c}R^6{}_c$, $NR^7$, $PR^7$, or $NH(R^8NH)_d$ group or a heterocyclic group eg of 2-10 carbon atoms and at least one N, S or 0 ring atom, preferably with the or each free valency on the N atom, especially a 2,4,6-tricarbonyl-1,3,5-triazinyl group

each of $R^1$ and $R^6$, which may be the same or different, represents a group such that Si-$R^1$ or Si-$R^6$ are hydrolisable with water

each of $R^2$, $R^5$ and $R^7$, which may be the same or different, represents an alkyl, cycloalkyl, aryl or aralkyl group

each of $R^3$, $R^4$ and $R^8$ which may be the same or different, represents a divalent organic group,

each of a and c, which may be the same or different, is 1-3, preferably 3, b is at least 2 such as 2-4, preferably 2 or 3, d is 0 or 1-4 especially 1 and n is 1-6 especially 1, 2 or 4.

Each of $R^1$ and $R^6$ may be an alkoxy group of 1-14 carbons eg 1-8 carbons such as methoxy, ethoxy, propoxy, butoxy amyloxy hexoxy and octyloxy or 2-ethylhexyloxy or an alkoxyalkylene group with the alkoxy group as defined above and 1-6 carbons in the alkylene group eg 1,2-ethylene, or an acyloxy group eg of 1-10 carbons especially an alkanoyloxy group of 2-6 carbons such as formyloxy acetoxy or propionyloxy group, or an organo substituted amino group eg a mono or di alkyl or mono or di aryl amino group with 1-10 or 6-12 carbons respectively such as methyl or ethylamino or anilino, or an oximino group (formed from a ketoxime by removal of the hydroxylic hydrogen), such as a dialkyl ketoximino, cycloalkanonimino or diaryl ketoximino group, with 2-10, 4-8 or 12-30 carbons respectively, such as a ketoximino group from acetone, methylethyl ketone or benzophenone. If the silane contains more than one $R^1$ group, the groups $R^1$ may be the same or different.

Each of $R^2$, $R^5$ and $R^7$ may be an alkyl group eg of 1-20 such as 1-8 carbons such as methyl ethyl or butyl, a cycloalkyl group eg of 5-8 carbons such as cyclohexyl, an aryl group eg an aromatic hydrocarbyl group, and preferably of 6-19 carbons such as phenyl or tolyl or an aralkyl group eg an aralkyl hydrocarbyl group and preferably of 7-20 carbons such as benzyl.

Each of $R^3$, $R^4$ and $R^8$ may be a divalent organic preferably hydrocarbyl group, such as a linear or branched alkylene group eg of 1-12 carbon atoms especially 2-8 carbons, such as 1,2 ethylene, 1,3-propylene or 1,6-hexylene, or a cycloalkylene group eg of 5-7 carbons such as 1,4-cyclohexylene, an arylene group preferably of 6-14 carbons such as 1,4-phenylene or biphenylene, or an alkylene group interrupted by arylene or arylene interrupted by alkylene with the alkylene and arylene groups preferably as defined above, and especially a phenylene bis methylene group or a phenylene bis(1,2-ethylene group) or an alkylene bis(phenylene group) such as a propane 2,2(phenylene) group. Each of $R^3$,$R^4$ and $R^8$ may also be aryl substituted alkylene eg of 7-14 carbons such as 2-phenyl-1,3-propylene, or alkylene eg of 2-14 carbons substituted by at least one hydroxy as in 2-hydroxy 1,3-propylene and/or interrupted by at least one oxygen atom as in 2-hydroxy-4-oxa-1,7- heptylene.

Particularly preferred compounds IV are those of formula $[R^1{}_aR^2{}_{3-a}SiR^3]_bX$ in which X comprises at least one N or S atom or group and especially those in which $R^3$ (and $R^4$ or $R^8$ if present) is 1,2-ethylene or 1,3-propylene and a (and c if present) is 3. Examples of preferred compounds are bis [3-trialkoxy silyl propyl] mono, di or tetrasulphides, or - amine or - oxide or - benzylphosphine ($R^7$ is benzyl) or - N,N$^1$ - 1,2-ethylenediamine, or tris (3-trialkoxy silyl propyl) triisocyanurate.

Other silanes are ones in which $R^{10}$ represents $R^3$, especially an alkylene group such as methylene or an arylene group such as p-phenylene. Examples of such compounds are methylene bis (trimethoxy silane) and -(tri ethoxysilane) and p-phenylene bis (trimethoxy silane) and (tri ethoxysilane).

The amount of the silane is usually 0.1-10% such as 0.2-5% and especially 0.5-2% by weight of the total weight of polar polymer and conductor.

The compositions of the invention preferably also contain a phenolic or amine antioxidant, in particular for stabilizing the polymer composition during use, eg in a buried cable.

The phenolic or amine antioxidant is preferably an aromatic compound, which is an amine or hindered phenol. The sterically hindered phenol usually has at least one alkyl group eg of 1-6 carbons and especially 2 alkyl groups in an ortho position to the phenolic hydroxyl group. Secondary or especially tertiary alkyl groups are preferred such as isopropyl, isobutyl and isoamyl, but especially tert butyl. The aromatic compound may just have the hydroxy group substituent, and alkyl substituents, but preferablycontains at least one other substituent especially containing an ester group such as one with a long fatty alkyl chain eg of 8-20 carbons. Other hindered phenols have 2 or more phenolic rings either bonded together directly or via an oxygen -NH- or -S- or alkylene or alkylidene bridge eg of 1-6 carbon atoms. Other polyphenolic compounds are formaldehyde condensaters of p- alkyl phenols and [bis(hindered phenolic ring) substituted] alkanoic esters of alcohols eg of 1-20 carbons such as stearyl alcohol or ethylene glycol. If desired the hindered phenol may contain enolizable groups such as -CONH- groups, as in hindered phenol oxamides.

Examples of hindered phenols are 2,6 di-tertbutyl phenol, thio bisphenols such as bis (2 hydroxy 3 tert butyl 5 methylphenyl) sulphide and bis (2 methyl 4 hydroxy 5 tert butylphenyl) sulphide, alkylidene bis phenols such as methylene and ethylidene bis (methyl tert butyl 2 or 4 phenols), hydroxybenzyl compounds such as 4-hydroxy 3,5-ditert butyl benzyl compounds such as tris 2,4,5-(4-hydroxy -3,5-di tert butylbenzyl) durene or tris[4-hydroxy 3,5-di tert.butyl benzyl]isocyanurate and amino phenols such as fatty acyl amino phenols and hydroxyphenyl propionates especially 3-[3,5-di-tert butyl 4-hydroxyphenyl]-propionates ester such as the mono ester of octadecanol (eg as sold as IRGANOX 1076) or the tetra ester of pentaerythritol (eg as sold as IRGANOX 1010)] or the bis[bis 3-(3,5 di-tert butyl 4 hydroxyphenyl) propionic acid ester of ethylene glycol.

The amine antioxidant is preferably aromatic and may be hindered with an alkyl group ortho to the amine group, but is preferably a secondary aromatic amine especially a bis (aromatic) amine wherein the aromatic groups are the same or different. Examples of hindered amines are secondary aromatic amines eg of 6-50 or 14-35 carbon atoms such as bis (4-alkyl phenyl) amines or bis [4-(2′-phenylproplidene) phenyl] amine. Other amine antioxidants are hindered N-heterocyclic compounds with at least one alkyl group eg of 1-6 carbon atoms and especially 2 alkyl groups in a ring carbon atom adjacent to N-heterocyclic atom. Secondary or tertiary alkyl groups are preferred such as isopropyl, isobutyl and isoamyl, but especially tertbutyl. Examples of the heterocyclic compounds are substituted piperidines, especially 2,6-dialkyl piperidines and their N-alkyl substituted derivatives.

Preferably the composition also contains a secondary antioxidant, which may preferably be a phosphorus containing compound such as a phosphite or phosphonite ester, or may be a thioether or disulphide.

The phosphorus antioxidant is usually an ester, with each P atom therein attached to at least 2 oxygen atoms in an ester linkage and attached also to another oxygen atom in an ester linkage or to a carbon atom or to a halogen eg F atom; thus phosphite phosphonite and halo phosphite esters are preferred. Examples of suitable phosphites are those of formula $[R^{25}0\text{-}P(OR^{26})O]_nR^{27}$ where n is an integer of 1 to 4 each of $R^{25}$, $R^{26}$ and $R^{27}$, which may be the same or different, represents an alkyl group eg 8-20 carbons such as tridecyl, stearyl, or a cycloalkyl group or an aryl group eg of 6-20 carbons eg an aromatic hydrocarbyl group especially phenyl, optionally substituted with 1 or 2 alkyl eg 1-6 carbon atom groups such as tert butyl, as in di-tert butylphenyl or nonylphenyl. Alternatively $R^{26}$ and $R^{27}$ together represent a divalent residue $R^{28}$ formed by removal of 2 hydroxyl groups from a 1,2 or 1,3 diol to give a compound of formula $R^{25}0P(0_2R^{28})$. Advantageously n is 2 and the phosphite is a di or poly phosphite wherein $R^{25}$ and $R^{26}$ are as defined and $R^{27}$ represents a divalent residue $R^{29}$ formed by removal of hydroxyl groups from a diol, such as a linear aliphatic diol (including ether diols) eg mono or dipropylene glycol, or a dihydroxylic phenol eg of 6-20 carbons, especially a phenol with 2 phenylene groups such as bisphenol A.$R^{27}$ may also represent a divalent group of formula

$$-R^{30}-O-(\underset{\displaystyle OR^{25}}{\underset{|}{P}}-O\ R^{30}-)_p$$

where p is 1-15 eg 2-10, and $R^{30}$ is as defined for $R^{29}$. $R^{27}$ as such or together with $R^{26}$ may also represent a tetra valent residue $R^{31}$ formed by removal of 4 hydroxyl groups from a tetra hydroxyl compound eg an aliphatic one of 4-8 carbon atoms such as pentaerythritol; preferably the phosphite is of formula $R^{25}$ O $P(0_2R^{31}0_2)POR^{25}$. Instead of the phosphite a phosphonite of formula $[R^{25}0(R^{26}0)P]_bR^{24}$ may be used wherein b is 1 or 2, $R^{25}$ and $R^{26}$ are as defined above and $R^{24}$ is an aliphatic group or aromatic group eg aromatic hydrocarbyl group of 6-19 atoms especially a phenyl or mono or dialkyl phenyl group in particular mono- or di-tertiary butyl phenyl, especially in the ortho and/or para positions, or $R^{24}$ forms a divalent aliphatic group $R^{32}$ eg of 1-10 carbon atoms or a divalent aromatic group such as an aromatic hydrocarbyl group with 6-20 carbons such as phenylene eg 1,4-phenylene or biphenylene eg p,p′-biphenylene. Preferably the phosphonite is of formula $R^{25}0(R^{26}0)PR^{32}P(OR^{26})OR^{25}$. Examples of suitable phosphorus compounds are the tris (2,4-di tert-butyl) phenyl phosphite (sold as IRGAFOS 168), tetrakis (2",4"-di-tert.butylphenyl)-4,4$^1$-biphenylene diphosphonite, (sold as IRGAFOS P-EPQ), bis(di-2,4-(tert butyl) phenyl diphosphite esters from pentaerythritol, the distearyl diphosphite esters from pentaerythritol, tetra phenyl di propylene glycol diphosphite, tetra kis(stearyl) ester of 2,2-bis(4-hydroxyphenyl) propane diphosphonite and the poly phosphite esters such as polydipropylene glycol phenyl polyphosphite with 4-10P atoms, and poly (2,2-bis(4 hydroxylphenyl) propane) alkyl polyphosphites, with 4-10 P atoms, wherein the alkyl group has an average of 15-16 carbon atoms.

Instead of or as well as the phosphorus ester, the polymer composition can contain at least one sulphur containing antioxidant such as a thio ether eg a dialkyl thioether or disulphide with 5-30 carbons in each alkyl such as di(octadecyl) disulphide or a diaryl thio ether of 12-30 especially 16-24 carbon atoms, such as a bis(tertiary alkyl phenyl) sulphide with eg 4-9 carbon atoms in each tertiary alkyl group, such as a tertiary butyl group, the sulphide optionally having in each aryl group at least one hydroxyl or other alkyl substituent eg of 1-8 carbons eg methyl or ethyl. Thuspreferred are thio bisphenols such as bis[hydroxy tertiary alkyl phenyl] sulphides and their nuclear alkyl substituted derivatives especially ones with the sulphur atom and/or hydroxyl group in an ortho position to the tertiary alkyl group; 2,2′-thio-bis(4-methyl-6-tert.butyl phenol) and 4,4-thio bis(3-methyl-6-tert.butyl phenol) such as that sold by Monsanto under the Trade Mark SANTONOX R are preferred. Other thio ethers are bis(alkoxy carbonyl alkylene sulphides) and disulphides with eg 8-24 carbon atoms in each alkoxy group, which is especially lauryloxy or stearyloxy, and with eg 1-6 carbon atoms in each alkylene group which is preferably 1,2-ethylene or 1,3-propylene; distearyl and dilauryl thio dipropionate esters are preferred.

The polymer composition may contain 0.01-0.5% of the primary or secondary antioxidant eg phenol, phosphite or phosphonite or sulphur containing antioxidant.

If desired the polymer composition may also contain polyethylene, which may be a homopolymer of ethylene or a copolymer of ethylene and at least one alpha olefin of 1-8 carbon atoms such as propylene, butene, 4 methylpentene-1, hexene-1 or octene-1 usually in weight amount of 0.1-15% especially 0.5-10% of alpha olefin to ethylene. While polyethylenes made with transition metal catalysts eg chromium oxide or Ziegler Natta ones may be used, the preferred polyethylene is a low density polyethylene (LDPE) made by free radical polymerisation, usually of density 915-930 kg/m$^3$. The weight percentage of polyethylene to total of polyethylene

and polar polymer is usually up to 40% eg 1-40% such as 10-30%. Instead of or as well as the polyethylene, the polymer composition may also contain an elastomeric polymer such as an ethylene propylene copolymer with 20-80% of each monomer or an ethylene propylene diene copolymer or a butadiene rubber eg with styrene and/or acrylonitrile especially a nitrile rubber eg with 10-50% or 20-40% acrylonitrile, the amounts in total of elastomer and/or rubber being 1-50% such as 5-15% or 20-40% based on the total weight of the polymer composition. Thus preferred compositions comprise 15-70% ethylene vinyl acetate or ethylene ethyl acrylate copolymer, 25-55% carbon black, 0% or 20-40% rubber eg nitrile rubber, by weight of the total weight of the composition. The polymer composition is preferably in the substantial absence of any polymer containing pendant hydrolyzable silane groups eg an ethylene vinyl trimethoxy silane graft or copolymer.

The polymer composition preferably also contains at least one free radical generator as cross linking agent eg for polar polymer, polyethylene, elastomer and/or rubber, usually in amount of 0.1-5% such as 0.5-3% or 0.6-2% by weight of the composition. The free radical generator may be a peroxide such as a hydrocarbyl peroxide, or a hydroperoxide or an acylperoxide or a peroxyester. The hydrocarbyl peroxide may be one in which each hydrocarbyl group which may be the same or different is an alkyl group (eg of 3-8 carbon atoms such as tertbutyl, hexyl or isopropyl) or alkylene group (eg of 3-12 carbon atoms, such as 2,5-dimethyl-2,5'hexylene), a cycloalkyl group (e.g of 5-9 carbon atoms) such as cyclohexyl and mono and di methylcyclohexyl) or aryl group eg of 6-14 carbon atoms such as phenyl or tolyl or an aralkyl group eg of 7-15 carbon atoms such as benzyl, 2-phenyl-2-propyl-(dimethyl benzene or cumyl) or bis(dimethyl)xylylene (eg as in bis(tertbutylperoxylisopropyl) benzene). The hydrocarboyl peroxide can contain 1-3 peroxyl groups, especially alkyl peroxy groups. The hydroperoxide may be an alkyl, cycloalkyl, aryl or aralkyl 30hydroperoxide with preferably 2-10, 5-8, 6-19 and 7-20 carbon atoms respectively, such as t-butyl hydroperoxide or cumene hydrogen peroxide. The di(acyl) peroxide is especially a di(hydrocarbyl carbonyl) peroxide with 1-16 carbon atoms in each hydrocarbyl group which is preferably alkyl such as diacetyl peroxide or aryl such as phenyl or tolyl such as benzoyl peroxide. The peroxyesters may be alkyl peresters of aliphatic, cycloaliphatic or aromatic acids eg of 1-20 carbon atoms wherein the alkyl group preferably contains 1-10 carbons and is especially tertiary alkyl such as tertiary butyl and the acid may be alkane mono and di oic acid especially of 2-15 carbons, eg acetic, isobutyroic 2-ethyl hexanoic, neodecanoic, azelic and valeric, or an aromatic acid eg aromatic hydrocarbyl mono and di carboxylic acid such as one of 7-12 carbons eg benzoic and phthalic acid. Di cumene peroxide is preferred.

The polymer composition may be made by melt mixing the ingredients eg in a batch mixer such as a Banbury mixer or in a continuous mixer which may be a single or twin screw extruder; all the ingredients may be mixed together directly or a master batch approach may be used for the polar polymer and additives with final mixing with any polyethylene and/or elastomer or rubber. The polymer composition usually contains the silane substantially uniformly distributed or dissolved therein, while the conductor is dispersed therein and the polyethylene and/or elastomeric polymer if present may form a dispersed phase in a disperse phase of the polar polymer. The conductor eg carbon black or a contaminant therein may interact with the silane to form a complex eg at the conductor surface or may react with groups on said surface eg silanes reacting with active hydrogen atoms on the carbon black surface such as carboxylic acid or phenolic groups thereon.

The polymer composition can be used as a semi conducting layer in an insulated electrical cable with one or more electrically conducting cores and an insulating dielectric layer surrounding the core, said insulating layer having two sides, a first side nearest the core and a second side farther from the core, the semi conducting layer being spaced between the core and insulating layer on its first side and/or situate outside the insulating layer on the second side. Preferably the cable has two semi conducting layers one formed on either side of the insulating layer, the semi conducting layer nearer the core optionally having a lower percentage of the polyethylene to total polymer than the semi conducting layer further from the core; the outer layer also tends to have a greater proportion of polar monomer in the polar polymer than the inner layer. Each of the semiconducting and insulating layer can be of uncured polymer or may have been cured or cross linked. The insulating layer usually comprises an ethylene polymer such as a homopolymer of ethylene or a copolymer of ethylene and an alpha olefin of 3-8 carbons, such as described above for use as an optional component of the semi conducting layer. In addition to the polyethylene the insulating layer may also comprise a minor amount of the polar polymer, (eg 1-20% eg 5-15% by weight of the total of ethylene polymer and polar polymer). The insulating layer may also comprise a hydrocarbon polymer having pendant silane groups carrying hydrolizable groups, such that on hydrolysis the polymer cross links via the silane groups; examples of such polymers are co- and graft polymers from alpha olefins eg of 2-8 carbons especially ethylene and ethylenically unsaturated trialkoxy silanes such as vinyl tri methoxy silane. Examples of such silyl polymers and their production and use are given in GB-A-2028831, 2039513, 1415194, 1357549 and many others the disclosures of which are hereby incorporated by reference. The silyl polymer may be the sole polymeric component of the insulating layer or may be mixed with a major amount of a polyethylene, eg as defined above. If desired the insulating layer may also contain metal complexant, but it is often substantially absent.

The cable may be made by coating the core with one or more layers of the semi conducting composition and one or more layers of the insulating layer composition, the layers being applied stepwise or simultaneously eg by coextrusion. The outer semi conducting layer may be applied separately to the insulating layer in the form of a tape. Any cross-linking or curing may be performed after the coating. The layer(s) of semi conducting composition usually contains the silane in an concentration greater than its concentration (if any) in the insulating layer, and preferably there is at least twice and especially at least 5 times the concentration of silane in the semi conducting layer(s) in total than in the insulating layer eg 2-1000 and especially 5-100 times.

The inner semi conducting layer may be 0.1-2 mm thick, the insulating layer 1-20 mm thick and the outer semi conducting layer 0.2-5 mm thick.

If desired the core may have further layers surrounding the outer semi conductive layer (if present), such as reinforcement layers such as braided textile or metal fabric or sheet. The outer semi-conducting layer may be strippable from the insulating layer, which is otherwise bonded to the core and/or to the inner semi-conducting layer. If desired there may be several cores each surrounded by the semi conducting layer or layers, the whole being inside one insulating layer. The core is usually of a metallic conductor such as copper or aluminium.

The cables of the invention may be used with low voltages but are preferably for medium or high voltages. The compositions of the invention can have a reduced tendency to degradation eg oxidative degradation compared to those without the silane.

The invention is illustrated in the following Examples.

Example 1

A polymer composition was made comprising a low density polyethylene LDPE of Melt Index (1 g/10 mins, determined according to ASTM D 1238 Condition E), and 0.22% by weight of 4,4'thio-bis(3-methyl 6-tertbutyl phenol) (sold as SANTONOX R). The polymer composition was doped with salts of various transition metals, all of which enhance olefin polymer degradation, the dopant being applied in methanolic solution to the composition to give a level of 100 ppm of metal. The experiments were repeated with 2-5 microlitres of bis [3-trimethoxy silyl propyl] sulphide (sold as Si-165 by Degussa) also applied to 5 mg of the composition. Each composition sample was then heated to 200°C and tested for oxidative stability using Differential Scanning Calorimetry at 200°C and the "Oxygen Induction Time" in minutes before onset of the oxidation exotherm obtained. The results were as follows.

| OIT (Mins) | | |
|---|---|---|
| Metal | Without Si165 | With Si165 |
| Fe III | 6 | 86 |
| Mn II | 8 | 90 |
| Cu II | 2 | 32 |
| None | 15 | |

The same experiments were repeated without the added transition metal but with the polymer composition in contact with an aluminium surface (as happens in a cable). In the absence of the S1 165 silane, the OIT was about 15 minutes but in the presence of S1 165 silane the OIT was 215 minutes.

Example 2

A polymer composition is made by melt blending (in parts by weight), 22 ethylene vinylacetate copolymer, 35 carbon black, 30 nitrile rubber 2 dicumyl peroxide and 1 of the silyl sulphide as used in example 1.

The composition is applied as a semi conducting layer over an aluminium core with an external coating of an insulating layer of a low density polyethylene LDPE. The application is continuous by coextrusion to give a cable with a coating of semi conducting layer and superimposed coating of the insulating layer.

The peroxide causes curing of the semiconducting layer in the cable.

Example 3

Polymer compositions and cables are prepared as described in Example 2 but with the following ingredients in the semiconducting composition (in part by weight), 60 ethylene ethyl acrylate copolymer, 37 carbon black, 1 peroxide and 1% of the silyl sulphide as used in Example 1, the peroxide causing curing of the semiconducting layer in the cable.

Example 4

A modified Ashcraft Test (as disclosed in EP 023239) was carried out on three samples.

Sample Preparation

Each sample was prepared by
(i) Moulding a polymeric insulation part with a knife-shaped mould at 130°C under non cross-linking conditions.
(ii) Moulding a semiconductive material into a knife shape that will fit inside the moulded polymeric insulation; this was carried out at 180°C for 15 min under cross-linking conditions.
(iii) Fitting the moulded parts from (i) and (ii) and fusing them together at 180°C for 15 mins under cross-linking conditions.
(iv) Two sets of samples were treated for 254 and 422 hours respectively.

Sample Materials

The polymeric insulation used was HFDM 4201 (virgin low density polyethylene).
The semi-conductive material used was HFDM 0595 (ethylene/ethyl acrylate copolymer with 40% wt/wt carbon black).
The silanes used are
Si 165
SLM 50922 (tetramethyl dimethoxy disiloxane, ex Wacker Silicones)
HFDM 4201 and HFDM 0595 are supplied by BP Chemicals.

Electrical Conditions

| | |
|---|---|
| Voltage | 5 KVolts |
| Frequency | 6 kHertz |
| Temperature | 65°C |
| Wet surrounding | Demineralised water - 0.01N NaCl Inner and outer of samples. |

Tree Lengths Measurement

To gain tree contrast for microscopic examination, a methylene blue solution stains samples. This solution is:
1 litre of demineralised water
+ 1.25 g of methylene blue
+ 2 g of NaOH
+ 1 drop of detergent.

Samples stay 1 hour in this boiling solution.
Length measurements are provided under a video-microscope with a magnification of 215.
The results are given in Table I; the experiments indicate that over extended periods of time there is an improvement in the average length of the trees and the maximum tree length.

TABLE I

| | HFDM 0595 | HFDM 0595+ 1% Si 165 | HFDM 0595 +1% SLM 50922 | Time Period |
|---|---|---|---|---|
| L avg. [U] | 70 | 125 | 93 | 254 |
| L max. [U] | 155 | 236 | 262 | 254 |
| # of Trees | 50 | 169 | 83 | 254 |
| L avg. [U] | 249 | 79 | 103 | 422 |
| L max. [U] | 431 | 339 | 365 | 422 |
| # of Trees | 25 | 106 | 39 | 422 |

## Claims

1. A polymer composition suitable for use as a semi-conducting layer comprising a polar ethylenic polymer, a particulate conductor and at least one hydrolyzable silane.

2. A polymer composition as claimed in claim 1 wherein the polar ethylenic polymer is a copolymer of ethylene and a polar ethylenically unsaturated monomer.

3. A polymer composition as claimed in claim 2 wherein the ethylenically unsaturated monomer is methyl or ethyl methacrylate.

4. A polymer composition as claimed in any one of claims 1 to 3 wherein the hydrolyzable silane is of the formula

   $$[R^1_aR^2_{3-a}Si]_b R^{11}$$

   where $R^1$ is a hydrolyzable group,
   $R^2$ is an alkyl, cycloalkyl, aryl, or aralkyl
   a is an integer from 1 to 3
   b is an integer from 1 to 4
   $R^{11}$ is an organic group of valency b and each $R^1$ and each $R^2$ can be the same or different.

5. A polymer composition as claimed in claim 4 wherein
   a is 3
   b is 2
   and $R^{11}$ is a group of formula

   $$-[R^3]\ X\ [R^{3'}]$$

   where X is O, S, NH or $NR^2$
   where $R^2$ is as defined above
   $R^3$ and $R^{3'}$ are independently a linear or branched alkylene group having from 1 to 12 carbon atoms.

6. A polymer composition as claimed in either claim 4 or 5 wherein $R^1$ is methoxy or ethoxy and $R^2$ is an alkyl group of 6 to 20 carbon atoms.

7. A polymer composition as claimed in claim 6 wherein $R^2$ is n-hexyl, n-octyl, lauryl, cetyl, stearyl or octadecyl.

8. A polymer composition as claimed in any one of the preceding claims wherein the particulate conductor

is carbon black, soot or graphite.

**9.** A polymer composition as claimed in any of claims 1 to 8 wherein the composition further comprises a phenolic or amine antioxidant.

**10.** An insulated electrical cable comprising an electrically conducting core, a semi-conducting layer surrounding and in contact with the core and a polymer insulating layer surrounding and in contact with the semi-conducting layer characterised in that the semi-conducting layer comprises a polymer composition as claimed in any one of claims 1 to 9.

**11.** An insulated electrical cable as claimed in claim 9 comprising a further semi-conducting layer comprising a polymer composition as claimed in any one of claims 1 to 9 which surrounds and is in contact with the polymer insulating layer.

**12.** An insulated electrical cable as claimed in either claim 10 or claim 11 wherein the concentration of hydrolyzable silane is greater in the semi-conducting layer or layers than in the polymer insulating layer.

**13.** A method of producing a polymer composition as claimed in any one of claims 1 to 9 comprising melt blending the polar ethylenic polymer, particulate conductor and hydrolyzable silane.

**14.** A method of making an insulated electrical cable comprising applying to an electrically conducting core a semi-conducting layer comprising a polymer composition as claimed in any one of claims 1 to 9 and optionally applying thereon a polymeric insulating layer.

**15.** The use of a polymer composition as claimed in any one of claims 1 to 9 as a semi-conducting layer in an insulated electrical cable.

European Patent Office

# EUROPEAN SEARCH REPORT

Application Number

EP 92 30 5774

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WORLD PATENTS INDEX LATEST<br>Derwent Publications Ltd., London, GB;<br>AN 84-033154<br>& JP-A-58 222 140 (MITSUBISHI PETROCHEM KK) 23 December 1983<br>* abstract * | 1,4,8, 13,15 | C08K13/02<br>C08L23/08<br>H01B1/24<br>//(C08K13/02, 3:02, 5:54) |
| X | WORLD PATENTS INDEX LATEST<br>Derwent Publications Ltd., London, GB;<br>AN 88-224327<br>& JP-A-63 159 473 (MITSUBISHI PETROCHEM KK) 2 July 1988<br>* abstract * | 1,2,4,6, 8,13,15 | |
| X | PATENT ABSTRACTS OF JAPAN<br>vol. 15, no. 64 (C-806)(4592) 15 February 1991<br>& JP-A-2 294 380 ( YOKOHAMA RUBBER CO LTD. ) 17 December 1983<br>* abstract * | 1,4-8 | |
| X | DE-A-2 805 875 (LICENTIA PATENT-VERWALTUNGS GMBH )<br>* page 3, paragraph 4 *<br>* page 4, paragraph 2 *<br>* page 4, paragraph 5; claims 1,2 * | 1-4, 13-15 | TECHNICAL FIELDS SEARCHED (Int. Cl.5)<br>C08K<br>H01B |

The present search report has been drawn up for all claims

| Place of search | Date of completion of the search | Examiner |
|---|---|---|
| THE HAGUE | 22 SEPTEMBER 1992 | FUHR C.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)